# FASCICULE DE BREVET EUROPEEN

(11) **EP 4 495 011 B1**
(45) Date de publication et mention de la délivrance du brevet: **02.09.2026**
(21) Numéro de dépôt: 24189337.9
(22) Date de dépôt: 18.07.2024
(51) Int. Cl.: B64D 37/30, B64D 37/32, A62C 3/06

(54) **MODULE POUR AÉRONEF COMPORTANT UN SYSTÈME DE TRAITEMENT DE DIHYDROGÈNE**
MODUL FÜR EIN FLUGZEUG MIT EINEM SYSTEM ZUR VERARBEITUNG VON DIWASSERSTOFF
MODULE FOR AN AIRCRAFT COMPRISING A SYSTEM FOR PROCESSING DIHYDROGEN

(30) Priorité: 20.07.2023 FR 2307801
(43) Date de publication de la demande: 22.01.2025
(73) Titulaire: Airbus Operations (S.A.S.), 31060 Toulouse Cedex 9 (FR)
(72) Inventeur: MILLIERE, Jérôme, 31060 Toulouse (FR); CZAPLA, Lionel, 31060 Toulouse (FR); JOUBERT, Romain, 31060 Toulouse (FR)
(74) Mandataire: Cabinet Le Guen Maillet

(56) Documents cités:
- EP-A1- 4 265 526
- FR-A1- 3 131 359
- US-A1- 2023 043 843
- US-A1- 2023 044 493
- US-B2- 9 873 519

## Description

### DOMAINE TECHNIQUE

La présente invention concerne un module comportant un caisson dans lequel est logé un système de traitement pour du dihydrogène servant à alimenter un moteur d'aéronef et où le caisson est rempli d'éléments de remplissage, ainsi qu'un aéronef comportant au moins un tel module.

### ÉTAT DE LA TECHNIQUE ANTÉRIEURE

Afin de réduire les émissions de dioxyde de carbone (CO₂) des moteurs d'aéronef, il est connu d'utiliser le dihydrogène comme carburant. L'aéronef comporte alors un réservoir de dihydrogène, et au moins un moteur alimenté par ledit dihydrogène grâce à des canalisations qui courent dans l'aéronef, entre le réservoir et chaque moteur et sur lesquelles des systèmes de traitement du dihydrogène comme des pompes, des réchauffeurs et des vannes sont installés.

La sécurité doit être assurée si un incident intervient sur la ligne d'alimentation entre le réservoir et le moteur. Pour cela, il est connu de mettre en place différents systèmes de sécurité.

Bien qu'un tel arrangement soit performant, il est souhaitable de limiter le volume de dihydrogène qui s'échappe lors d'un incident.

Les documents US-A-2023/044493, FR-A-3 131 359, US-A-2023/043843, US-B-9,873,519, EP-A-4 265 526 divulguent des modules de l'état de la technique.

### EXPOSE DE L'INVENTION

Un objet de la présente invention est de proposer un module pour aéronef comportant un caisson dans lequel est disposé un système de traitement du dihydrogène où ledit caisson est rempli d'éléments de remplissage permettant de réduire la place disponible pour le dihydrogène en cas de fuite.

À cet effet, est proposé un module pour un aéronef, ledit module comportant :
- un caisson étanche et comportant des parois délimitant un volume intérieur,
- un système de traitement destiné à traiter du dihydrogène et fixé à l'intérieur dudit caisson, et
- des éléments de remplissage remplissant au moins en partie le volume intérieur autour du système de traitement et en épousant les formes dudit système de traitement, où chaque élément de remplissage prend la forme d'un sac contenant des billes.

Par la présence des éléments de remplissage autour du système de traitement, l'espace disponible pour le dihydrogène en cas de fuite à l'intérieur du caisson est réduit ce qui limite la quantité de dihydrogène pouvant être présente dans ledit caisson.

Avantageusement, les billes sont étanches.

Avantageusement, les billes sont des billes de verre.

Avantageusement, le sac est étanche.

L'invention propose également un aéronef comportant un réservoir de dihydrogène, un moteur, et au moins un module selon l'une des variantes précédentes fluidiquement connecté entre le réservoir et le moteur.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
Fig. 1 est une vue de côté d'un aéronef selon l'invention,
Fig. 2 est une représentation schématique et en coupe d'un module selon un exemple non revendiqué, et
Fig. 3 est une représentation schématique et en coupe d'un module selon un mode de réalisation de l'invention.

### EXPOSÉ DÉTAILLÉ DE MODES DE RÉALISATION

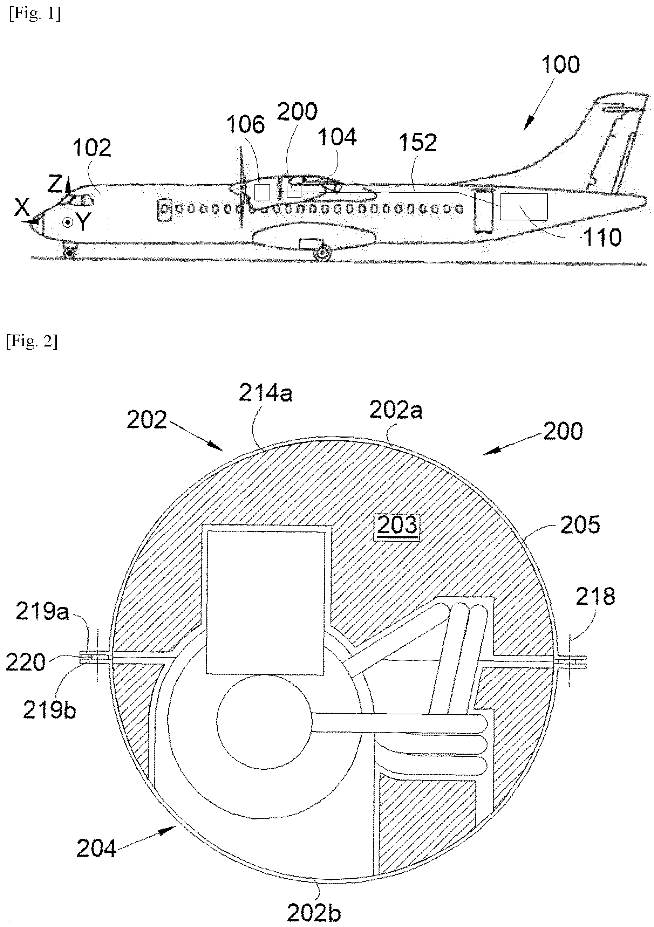

Dans la description qui suit, les termes relatifs à une position sont pris en référence à un aéronef en position normale de vol, c'est-à-dire comme il est représenté sur la Fig. 1.

Dans la description qui suit, et par convention, on appelle X la direction longitudinale de l'aéronef, on appelle Y la direction transversale qui est horizontale lorsque l'aéronef est au sol, et Z la direction verticale qui est verticale lorsque l'aéronef est au sol, ces trois directions X, Y et Z étant orthogonales entre elles.

La Fig. 1 montre un aéronef 100 qui comporte un fuselage 102 de chaque côté duquel est fixée une aile 104 qui porte au moins un moteur 106 fonctionnant avec du dihydrogène comme carburant. Dans le mode de réalisation de l'invention présenté à la Fig. 1, le moteur 106 est un moteur à hélice, par exemple un moteur électrique alimenté par une pile à combustible à dihydrogène, mais tout autre type de moteur est envisageable.

La flèche F indique la direction en marche avant de l'aéronef 100.

L'aéronef 100 comporte au moins un réservoir 110 dans lequel est stocké le dihydrogène, préférentiellement sous forme liquide. Dans le mode de réalisation de l'invention, le réservoir 110 est disposé à l'arrière du fuselage 102, mais un positionnement différent est possible. L'aéronef 100 comporte également au moins un module 200 qui est fluidiquement connecté entre le réservoir 110 et le moteur 106, en particulier par l'intermédiaire d'une canalisation générale 152 qui est elle-même fluidiquement connectée entre le réservoir 110 et le moteur 106 à alimenter.

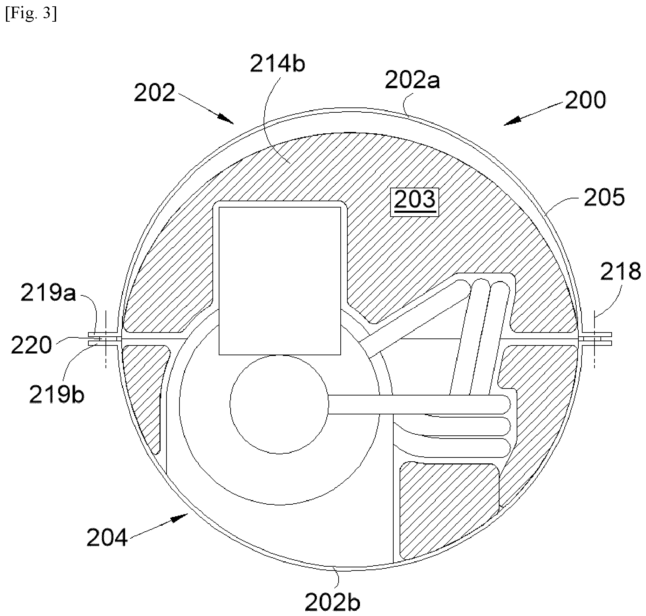

Le module 200 est monté de manière étanche sur la canalisation générale 152, c'est-à-dire que la canalisation générale 152 traverse le module 200 de part en part. Dans le mode de réalisation de l'invention présenté sur la Fig. 1, il y a un seul module 200 mais il peut y en avoir plusieurs disposés les uns à la suite des autres le long de la canalisation générale 152. La Fig. 2 montre le module 200 selon un exemple non revendiqué et la Fig. 3 montre le module 200 selon un mode de réalisation de l'invention.

Dans l'exemple et le mode de réalisation, le module 200 comporte un caisson 202 qui comporte des parois 205 délimitant un volume intérieur 203. Le caisson 202 est étanche pour empêcher que du dihydrogène qui serait présent dans le caisson 202 se répande hors du caisson 202.

La canalisation générale 152 traverse l'une des parois 205 en provenant du réservoir 110 et traverse l'une des parois 205 pour atteindre le moteur 106. La traversée de chaque paroi 205 de la canalisation générale 152 s'effectue de manière étanche à l'aide de moyens appropriés et connus de l'homme du métier.

Le module 200 comporte également un système de traitement 204 qui traite le dihydrogène qui s'écoule dans la canalisation générale 152 traversant le caisson 202. Un tel système de traitement 204 est par exemple une pompe, un réchauffeur ou une vanne ou autres ou un ensemble de plusieurs de ces éléments, pouvant être reliés par des tuyaux simple ou double peau.

Le système de traitement 204 est fixé à l'intérieur du caisson 202 en particulier en étant fixé aux parois 205 par tous moyens de fixation appropriés comme des systèmes vis-écrous, des rivets, etc. En alternative le système de traitement 204 peut être soudé aux parois 205.

La mise en place du système de traitement 204 dans le caisson 202 permet de contenir le dihydrogène dans le caisson 202 en cas de fuite au niveau du système de traitement 204.

Le caisson 202 est rempli au moins en partie d'éléments de remplissage 214a-b.

Chaque élément de remplissage 214a-b remplit ainsi en partie le volume intérieur 203 autour du système de traitement 204 et en fonction du degré de remplissage du volume intérieur 203, l'espace restant pour le dihydrogène en cas de fuite est réduit d'autant. Chaque élément de remplissage 214a-b est un élément qui ne participe pas au fonctionnement du système de traitement 204 et qui n'a pas d'autre fonction que de remplir le volume intérieur 203.

Avec un tel arrangement, il est ainsi facile de remplir le caisson 202 d'éléments de remplissage 214a-b limitant le volume disponible pour le dihydrogène en cas de fuite.

Dans l'exemple non revendiqué présenté à la Fig. 2, chaque élément de remplissage 214a prend la forme d'un bloc de mousse qui est fixé à une paroi 205 à l'intérieur du caisson 202, c'est-à-dire à une face intérieure d'une paroi 205.

Pour s'adapter au mieux aux formes du système de traitement 204, le bloc de mousse est usiné de manière à épouser au mieux les formes dudit système de traitement 204.

Le bloc de mousse est ensuite collé dans le caisson 202 aux endroits appropriés.

La mousse utilisée est de préférence étanche pour limiter l'absorption du dihydrogène par ladite mousse.

L'étanchéité de la mousse peut également être obtenue par exemple en recouvrant le bloc de mousse d'un film étanche ou d'une résine étanche.

Dans le mode de réalisation de l'invention présenté à la Fig. 3, chaque élément de remplissage 214b prend la forme d'un sac contenant des billes, en particulier des billes de verre avec un diamètre de l'ordre de 30 à 125 micromètres. Chaque bille est préférentiellement étanche pour empêcher au dihydrogène de s'y introduire.

En fonction de l'espace que le sac de billes doit remplir, le sac peut avoir différentes formes adaptées à l'endroit où il doit être positionné, en outre, la forme souple du sac de billes permet à l'élément de remplissage (le sac et les billes) d'épouser également les formes du système de traitement 204.

Selon une variante de réalisation, le sac est étanche pour empêcher au dihydrogène de s'y introduire.

Dans les Figs. 2 et 3, le caisson 202 est constitué de deux coques 202a-b fixées l'une à l'autre de manière étanche par tous moyens de fixation 218 appropriés comme des systèmes vis-écrous, des rivets, etc.

Chaque coque 202a-b présente une bride 219a-b qui s'étend sur le pourtour de la coque 202a-b et est en regard de la bride 219b-a de l'autre coque 202b-a et les moyens de fixation 218 fixent les brides 219a-b entre elles. Pour assurer l'étanchéité entre les deux coques 202a-b, un joint 220 est disposé entre elles et plus spécifiquement ici entre les brides 219a-b.

Un procédé de remplissage du module 200 comporte les étapes de :
- fourniture des deux coques 202a-b séparées,
- fourniture des éléments de remplissage 214a-b,
- mise en place des éléments de remplissage 214a-b et du système de traitement 204, et
- réunion et fixation des deux coques 202a-b ensemble de manière étanche.

Si le système de traitement 204 est déjà livré fixé à une coque 202b, il n'est pas besoin de le mettre en place lors de l'étape de mise en place.

La mise en place des éléments de remplissage consiste également si besoin à l'usinage des éléments de remplissage 214a-b et/ou à la fixation des éléments de remplissage 214a-b sur l'une des coques 202a-b.

Au cours de l'étape de réunion et de fixation, le joint 220 est également mis en place.

Bien que les éléments de remplissage 214a-b soient décrits comme prenant soit, dans un exemple non revendiqué, la forme d'un bloc de mousse, soit, selon l'invention revendiquée, la forme d'un sac contenant des billes, il est possible d'utiliser les deux types d'éléments de remplissage pour un même caisson 202.

## Revendications

1. Module (200) pour un aéronef (100), ledit module (200) comportant :
- un caisson (202) étanche et comportant des parois (205) délimitant un volume intérieur (203),
- un système de traitement (204) destiné à traiter du dihydrogène et fixé à l'intérieur dudit caisson (202), et
- des éléments de remplissage (214a-b) remplissant au moins en partie le volume intérieur (203) autour du système de traitement (204) et en épousant les formes dudit système de traitement (204),
ledit module (200) étant **caractérisé en ce que** chaque élément de remplissage (214b) prend la forme d'un sac contenant des billes.

2. Module (200) selon la revendication 1, **caractérisé en ce que** les billes sont étanches.

3. Module (200) selon l'une des revendications 1 ou 2, **caractérisé en ce que** les billes sont des billes de verre.

4. Module (200) selon la revendication 3, **caractérisé en ce que** le sac est étanche.

5. Aéronef (100) comportant un réservoir (110) de dihydrogène, un moteur (106), et au moins un module (200) selon l'une des revendications précédentes fluidiquement connecté entre le réservoir (110) et le moteur (106).

## Patentansprüche

1. Modul (200) für ein Luftfahrzeug (100), das Modul (200) umfassend:
- einen Behälter (202), der dicht ist und Wände (205) umfasst, die ein Innenvolumen (203) begrenzen,
- ein Behandlungssystem (204), das dazu bestimmt ist, Wasserstoff zu behandeln, und im Inneren des Behälters (202) befestigt ist, und
- Füllelemente (214a-b), die das Innenvolumen (203) um das Behandlungssystem (204) herum mindestens teilweise füllen und eng an den Formen des Behandlungssystems (204) anliegen,
wobei das Modul (200) **dadurch gekennzeichnet ist, dass** jedes Füllelement (214b) die Form eines Kugeln enthaltenden Beutels annimmt.

2. Modul (200) nach Anspruch 1, **dadurch gekennzeichnet, dass** die Kugeln dicht sind.

3. Modul (200) nach einem der Ansprüche 1 oder 2, **dadurch gekennzeichnet, dass** die Kugeln Glaskugeln sind.

4. Modul (200) Anspruch 3, **dadurch gekennzeichnet, dass** der Beutel dicht ist.

5. Luftfahrzeug (100), umfassend einen Tank (110) für Wasserstoff, ein Triebwerk (106) und mindestens ein Modul (200) nach einem der vorhergehenden Ansprüche, das fluidisch zwischen dem Tank (110) und dem Triebwerk (106) angeschlossen ist.

## Claims

1. Module (200) for an aircraft (100), said module (200) comprising:
- a sealed housing (202) and comprising walls (205) delimiting an interior volume (203),
- a processing system (204) intended to process dihydrogen fixed on the inside of said housing (202) and
- filling elements (214a-b) filling at least in part the interior volume (203) around the processing system (204) and conforming to the shapes of said processing system (204), said module (200) being **characterized in that** each filling element (214b) takes the form of a bag containing beads.

2. Module (200) according to Claim 1, **characterized in that** the beads are sealed.

3. Module (200) according to any one of Claims 11 or 2, **characterized in that** the beads are glass beads.

4. Module (200) according to Claim 3, **characterized in that** the bag is sealed.

5. Aircraft (100) comprising a dihydrogen tank (110), an engine (106) and at least one module (200) according to any one of the preceding claims, fluidically connected between the tank (110) and the engine (106).
